# EUROPÄISCHE PATENTSCHRIFT

(11) **EP 1 074 793 B1**
(45) Veröffentlichungstag und Bekanntmachung des Hinweises auf die Patenterteilung: **06.07.2005**
(21) Anmeldenummer: 00115819.5
(22) Anmeldetag: 22.07.2000
(51) Int. Cl.: F24D 3/14

(54) **Noppenplatte für eine Fussbodenheizung**
Plate with protuberances for under floor heating
Plaque à plots pour chauffage par le sol

(30) Priorität: 04.08.1999 DE 19936801
(43) Veröffentlichungstag der Anmeldung: 07.02.2001
(73) Patentinhaber: Uponor Rohrsysteme GmbH, 97437 Hassfurt (DE)
(72) Erfinder: Weinmann, Heinz, 97437 Hassfurt (DE)
(74) Vertreter: LOUIS- PÖHLAU- LOHRENTZ

(56) Entgegenhaltungen:
- EP-A- 0 806 614
- EP-A- 0 811 808
- EP-A- 0 821 202
- DE-A- 19 750 277
- DE-U- 29 805 158
- FR-A- 2 746 426

## Beschreibung

Die Erfindung betrifft eine Noppenplatte für eine Fußbodenheizung, wobei von einem Grundflächenelement Noppen nach oben stehen, die in einem um einen halben Teilungsabstand versetzten quadratischen Gitterraster vorgesehen sind.

Solche Noppenplatten sind in einer Vielzahl unterschiedlicher Ausbildungen bekannt. Beispielsweise beschreibt die DE 84 13 516 U1 eine solche Noppenplatte bzw. eine Elektro-Flächenheizung mit derartigen Noppenplatten. Bei diesen bekannten Noppenplatten stehen von einem Grundflächenelement Noppen nach oben, die in einem quadratischen, nicht versetzten Gitterraster vorgesehen sind. Die Noppen sind mit Klemmnasen ausgebildet, um zwischen benachbarten Noppen ein Heizungsrohr einklemmen zu können. Um diese bekannten Noppenplatten miteinander überlappend verbinden zu können, ist es erforderlich, daß die entsprechenden randseitigen Noppen mit in der Höhe und im Grundflächenprofil reduzierten Abmessungen dimensioniert sind, um die randseitigen Noppen der miteinander überlappend zu verbindenden Noppenplatten druckknopfartig zusammenfügen zu können. Das stellt werkzeugseitig einen nicht zu vernachlässigenden Aufwand dar. Außerdem kann das Einklemmen eines Heizrohres zwischen den Noppen einen nicht zu vernachlässigenden Kraft- bzw. Arbeitsaufwand darstellen, wenn die Noppenplatte eine ausreichende Steifigkeit bzw. Formstabilität besitzt, um zu Montagezwecken betreten werden zu können. Infolge der Ausbildung der Noppen mit einer ebenflächigen Oberseite ist die Elastizität der Noppen entsprechend gering.

Aus der EP 0 811 808 A2 ist ein Verlegesystem für Fußboden-Heizungsrohre bekannt, wobei genoppte rechteckige Trägerelemente aus einer Dämmschicht aus aufgeschäumtem Kunststoff, vorzugsweise Polystyrol, und einer tiefgezogenen Noppenfolie aus Kunststoff, vorzugsweise aus Polystyrol, zur Anwendung gelangen. Zwischen den Noppen können Heizungsrohre festgeklemmt werden. An zwei aneinanderstoßenden Kanten steht die Noppenfolie mit einer Noppenreihe über die Dämmschicht über. Die Noppen der Noppenfolie an den beiden anderen Kanten, an denen sie nicht über die Dämmschicht überstehen, weisen einen etwas geringeren Querschnitt auf, so daß diese zuletzt genannten Noppen mit den zuerst genannten Noppen druckknopfartig zusammensteckbar sind. Die Ausbildung der Noppenplatten mit Noppen unterschiedlichen Querschnitts stellt auch hier werkzeugseitig einen entsprechenden Aufwand dar. Durch die Kombination der jeweiligen Noppenplatte mit einer Dämmschicht aus aufgeschäumtem Kunststoff ergibt sich bei der Lagerung bzw. Bevorratung dieser bekannten Trägerelemente ein entsprechender Platz- bzw. Raumbedarf. Gleiches gilt für den Transport beispielsweise vom Großhändler zum die Trägerelemente verlegenden Installateur.

Aus der EP 0 821 202 A1 ist eine Noppenplatte entsprechend dem Oberbegriff des Anspruchs 1 bekannt, wobei die Noppen dieser bekannten Noppenplatte eine kreisrunde oder regelmäßig mehreckige Grundflächenstruktur aufweisen und um ihre zum Grundflächenelement senkrecht orientierte zentrale Hochachse rotationssymmetrisch ausgebildet sind.

Der Erfindung liegt die Aufgabe zugrunde, eine Noppenplatte der eingangs genannten Art zu schaffen, die vergleichsweise einfach und preisgünstig herstellbar und einfach und kostengünstig verlegbar ist, wobei die überlappende Verbindung benachbarter Noppenplatten einfach und zuverlässig möglich ist.

Diese Aufgabe wird bei einer Noppenplatte der eingangs genannten Art erfindungsgemäß dadurch gelöst, daß jede Noppe eine kreuzförmige, im Gitteraster orientierte Grundflächenkontur aufweist, wobei jede Noppe in Richtung diagonal zum Gitterraster vom Grundflächenelement ausgehend nach oben kegelstumpfförmig verjüngt und in Richtung des Gitterrasters jeweils mit einer nach oben überhängenden, zum Einklemmen eines Heizungsrohres vorgesehenen Klemmnase ausgebildet ist, und daß die Oberseite jeder Noppe in der Nachbarschaft jeder Klemmnase eine zum Gitterraster parallel orientierte Rinne aufweist.

Dadurch, daß jede Noppe in Richtung diagonal zum Gitterraster vom Grundflächenelement ausgehend nach oben kegelstumpfförmig verjüngt ausgebildet ist, ist es einfach möglich, Noppenplatten überlappend miteinander zu verbinden, wobei die entsprechenden Noppen miteinander insbesondere dadurch druckknopfartig verbunden werden, daß jede Noppe in Richtung des Gitterrasters jeweils mit einer nach oben überhängenden, hinterschneidenden Klemmnase ausgebildet ist. Durch diesen Überhang bzw. durch die entsprechende Hinterschneidung ergibt sich eine zuverlässige druckknopfartige Verrastung der entsprechenden Noppen benachbarter und miteinander zu verbindender Noppenplatten, wobei die erforderliche Elastizität der überhängenden Klemmnasen erfindungsgemäß in einfacher und zuverlässiger Weise dadurch erzielt wird, daß die Oberseite jeder Noppe in der Nachbarschaft jeder Klemmnase eine zum Gitterraster parallel orientierte Rinne aufweist. Diese Rinnen gewährleisten die erforderliche elastische Nachgiebigkeit der Klemmnasen während des druckknopfartigen Verbindens benachbarter Noppenplatten und während der Verlegung von Heizungsrohren.

Bevorzugt ist es bei der erfindungsgemäßen Noppenplatte, wenn jede Rastnase vom Grundflächenelement ausgehend nach oben trapezförmig verjüngt ausgebildet ist. Hierdurch wird die Zentrierung der miteinander zu verbindenden, sich entsprechend überlappenden Noppenplatten beim Zusammenbau unterstützt.

Das Verhältnis der Breite jeder Rastnase in der Nachbarschaft des Grundflächenelementes zum halben Teilungsabstand des Gitterrasters kann größenordnungsmäßig 1:3 bis 1:4 betragen. Durch eine solche Dimensionierung wird erreicht, daß die Kontaktfläche zwischen den Noppen der Noppenplatte und dem zwischen den Noppen der Noppenplatte fixierten Heizungsrohr relativ klein ist. Das ist unter wärmetechnischen Gesichtspunkten vorteilhaft.

Demselben Zwecke, d.h. der wärmetechnischen Optimierung, ist es dienlich, wenn bei der erfindungsgemäßen Noppenplatte das Grundflächenelement mit Erhebungen ausgebildet ist, die zwischen den Noppen entlang den Gitterlinien des Gitterrasters verlaufen. Mit Hilfe der besagten Erhebungen werden die Heizungsrohre vom Grundflächenelement definiert geringfügig angehoben, um zu dem auf den miteinander überlappend verbundenen Noppenplatten aufgebrachten Heizestrich einen guten Wärmekontakt zu gewährleisten. Ein weiterer, ganz erheblicher Vorteil der erwähnten Erhebungen besteht darin, daß sie sich im Überlappungsbereich benachbarter Noppenplatten ebenfalls entsprechend überlappen und somit an den überlappenden Verbindungsstellen ein unerwünschtes Durchlaufen des noch flüssigen Heizestrichs zwischen den Noppenplatten zum Boden hin verhindern.

Die Erhebungen können eine Breite besitzen, die der Breite der Klemmnasen in der Nachbarschaft des Grundflächenelementes entspricht, d.h. die streifenförmigen Erhebungen können sich von den Klemmnasen mit deren Breite ohne Abstufung oder Absatz wegerstrecken. Das ist unter Stabilitätsgesichtspunkten vorteilhaft.

Die erfindungsgemäße Noppenplatte besteht vorzugsweise aus einer formstabilen Tiefziehfolie. Hierbei kann es sich um eine Polystyrolfolie mit einer Dicke von größenordnungsmäßig 0,8 mm handeln. Selbstverständlich sind auch andere Materialien mit anderen Wanddicken anwendbar.

Die erfindungsgemäße Noppenplatte kann in vorteilhafter Weise zur direkten überlappenden Verlegung auf einer Standard-Wärmedämmung vorgesehen sein. Diese Standard-Wärmedämmung kann der Installateur vor Ort besorgen, was bedeutet, daß nur erfindungsgemäße Noppenplatten angeliefert werden müssen. Das ist unter Kostengesichtspunkten vorteilhaft. Auch unter logistischen Gesichtspunkten ist das vorteilhaft, weil die entsprechenden Lagerflächen beim Hersteller und beim Handel entbehrlich sind. Ein weiterer Vorteil besteht darin, daß es nicht erforderlich ist, großvolumiges Dämmaterial mehrfach zu transportieren, so daß auch die Umweltbelastung verringert ist. Selbstverständlich ist es auch möglich, daß die erfindungsgemäße Noppenplatte an ihrer Unterseite - wie handelsübliche Noppenplatten - mit einer Wärme- und Trittschalldämmung versehen ist.

Weitere Einzelheiten, Merkmale und Vorteile ergeben sich aus der nachfolgenden Beschreibung eines in der Zeichnung dargestellten Ausführungsbeispieles der erfindungsgemäßen Noppenplatte. Es zeigen:
- Figur 1: eine Draufsicht auf zwei abschnittweise gezeichnete und sich randseitig überlappende, druckknopfartig miteinander verbundene Noppenplatten,
- Figur 2: einen Schnitt entlang der Schnittlinie II-II durch eine Noppe einer Noppenplatte,
- Figur 3: einen Schnitt entlang der diagonalen Schnittlinie III-III in Figur 1 durch eine Noppe einer Noppenplatte,
- Figur 4: einen Schnitt entlang der Schnittlinie IV-IV in Figur 1 im Überlappungsbereich benachbarter Noppenplatten, und
- Figur 5: einen Schnitt entlang der Schnittlinie V-V in Figur 1 durch zwei miteinander druckknopfartig verbundene Noppen der sich überlappenden Noppenplatten.

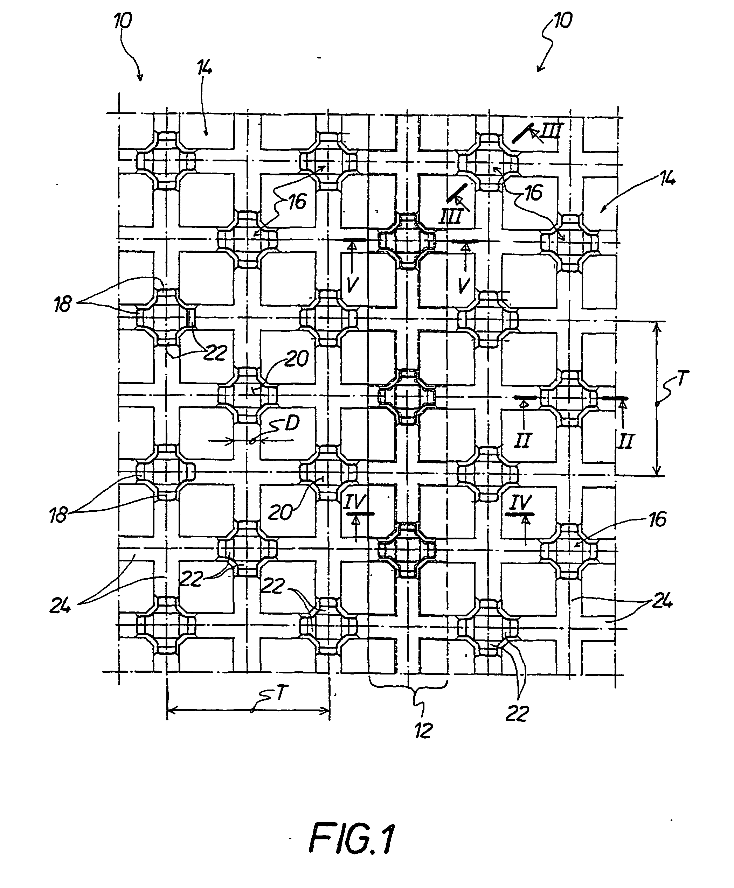

Figur 1 zeigt abschnittweise in einer Ansicht von oben zwei Noppenplatten 10 aus einer formstabilen Polystyrol-Tiefziehfolie, die sich entlang eines gemeinsamen Randbereiches 12 überlappen. Jede Noppenplatte 10 weist ein ebenes Grundflächenelement 14 auf, von welchem Noppen 16 nach oben stehen.Die Noppen sind in einem um einen halben Teilungsabstand versetzten quadratischen Gitterraster vorgesehen. Der Teilungsabstand ist mit T bezeichnet.

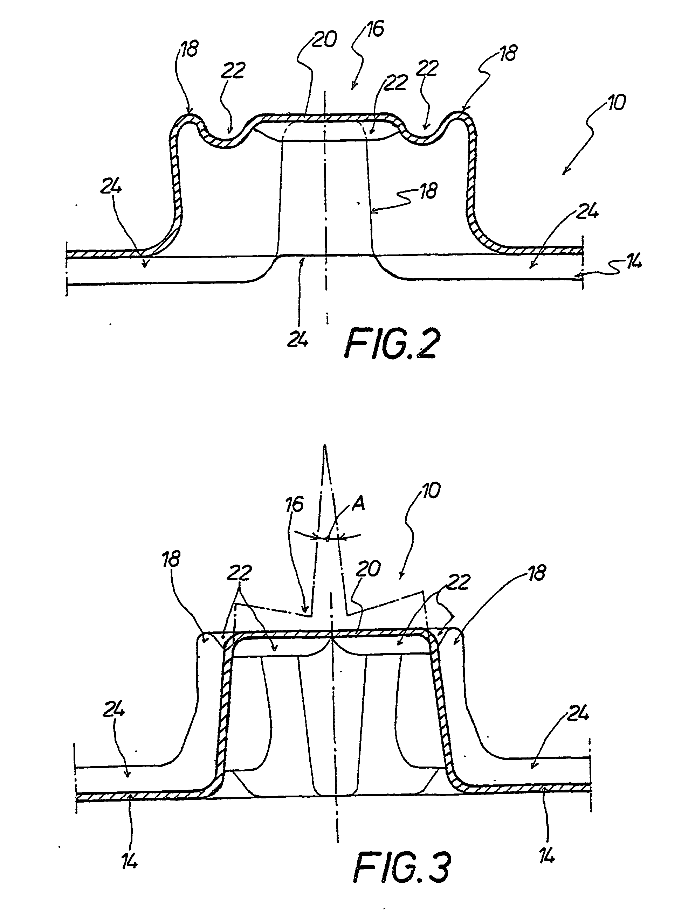

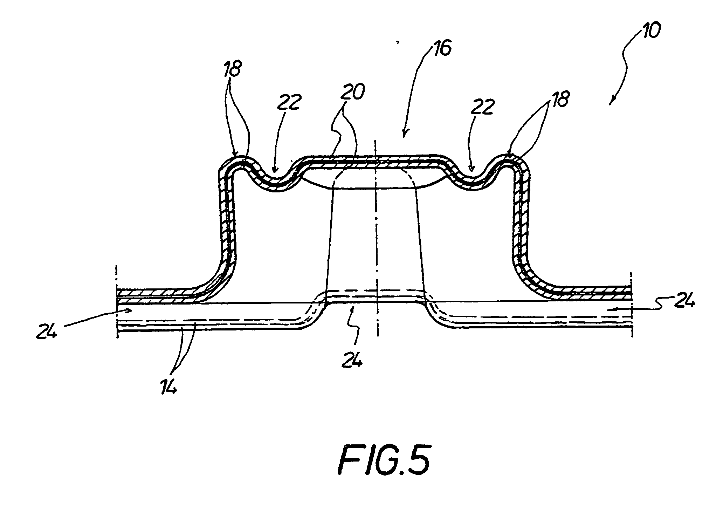

Jede Noppe 16 weist eine kreuzförmige, im Gitterraster orientierte Grundflächen kontur auf und ist in Richtung diagonal zum Gitterraster vom Grundflächenelement 14 ausgehend nach oben kegelstumpfförmig verjüngt ausgebildet, wie aus Figur 3 ersichtlich ist. Dieser Verjüngungswinkel ist in Figur 3 mit A bezeichnet. Jede Noppe 16 ist in Richtung des Gitterrasters jeweils mit einer nach oben überhängenden Klemmnase 18 ausgebildet, wie aus den Figuren 2, 4 und 5 ersichtlich ist.

Die Oberseite 20 jeder Noppe 16 ist in der Nachbarschaft jeder Klemmnase 18 mit einer Rinne 22 ausgebildet, um eine bestimmte elastische Nachgiebigkeit der Klemmnasen 18 während des druckknopfartigen Zusammenfügens der Noppen entlang des gemeinsamen Randbereiches 12 benachbarter Noppenplatten zu gewährleisten. Die Rinnen 22 an der Oberseite 20 der Noppen 16 sind zum Gitterraster parallel orientiert.

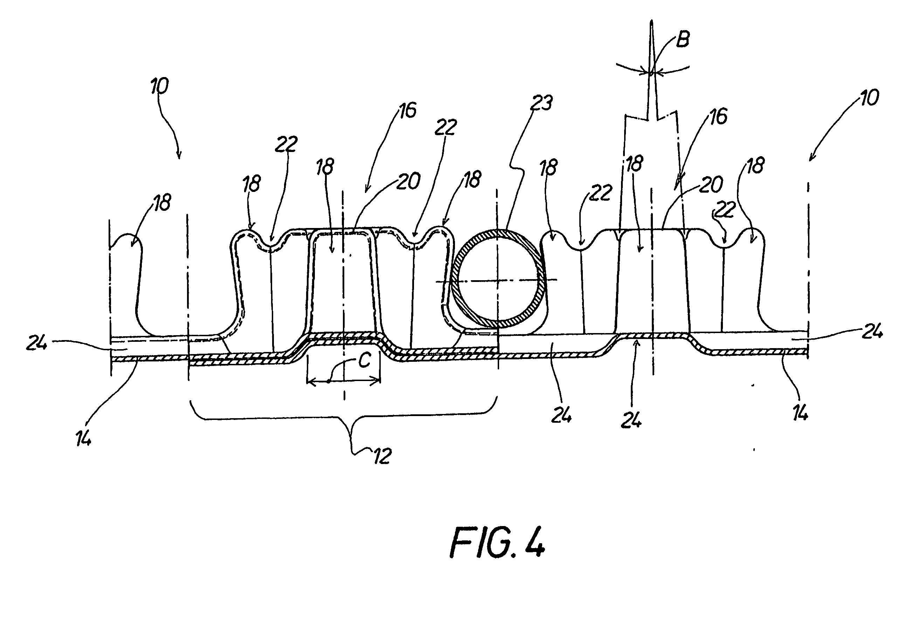

Die überhängenden Klemmnasen 18 dienen auch zum Festklemmen eines Heizungsrohres 23 (sh. Figur 4) an den Noppenplatten 10.

Wie aus den Figuren 2, 4 und 5 ersichtlich ist, ist jede Klemmnase 18 vom Grundflächenelement 14 ausgehend nach oben trapezförmig verjüngt ausgebildet. Der entsprechende Trapezwinkel ist in Figur 4 mit B bezeichnet. Das Verhältnis der Breite C (sh. Figur 4) jeder Klemmnase 18 zum halben Teilungsabstand T des Gitterrasters beträgt in der Nachbarschaft des Grundflächenelementes 14 größenordnungsmäßig 1:3 bis 1:4.

Das Grundflächenelement 14 jeder Noppenplatte 10 ist mit Erhebungen 24 ausgebildet, die entlang den Gitterlinien des Gitterrasters der Noppen verlaufen und die sich zwischen den Noppen 16 erstrecken. Die Erhebungen 24 weisen eine der Breite C der Klemmnasen 18 in der Nachbarschaft des Grundflächenelementes 14 entsprechende Breite D auf
(sh. Figur 1).

Gleiche Einzelheiten sind in den Figuren 1 bis 5 jeweils mit denselben Bezugsziffem bezeichnet, so daß es sich erübrigt, in Verbindung mit den Figuren 1 bis 5 alle Einzelheiten jeweils detailliert zu beschreiben.

## Patentansprüche

1. Noppenplatte für eine Fußbodenheizung, wobei von einem Grundflächenelement (14) Noppen (16) nach oben stehen, die in einem um einen halben Teilungsabstand (T) versetzten quadratischen Gitterraster vorgesehen sind,
**dadurch gekennzeichnet,**
**daß** jede Noppe (16) eine kreuzförmige, im Gitterraster orientierte Grundflächenkontur aufweist, wobei jede Noppe (16) in Richtung diagonal zum Gitterraster vom Grundflächenelement (14) ausgehend eine nach oben kegelstumpfförmig verjüngte Schrägfläche und in Richtung des Gitterrasters jeweils mit einer nach oben überhängenden, zum Einklemmen eines Heizungsrohres (23) vorgesehenen Klemmnase (18) ausgebildet ist, und wobei die Oberseite (20) jeder Noppe (16) in der Nachbarschaft jeder Klemmnase (18) eine zum Gitterraster parallel orientierte Rinne (22) aufweist.

2. Noppenplatte nach Anspruch 1,
**dadurch gekennzeichnet,**
**daß** jede Klemmnase (18) vom Grundflächenelement (14) ausgehend nach oben trapezförmig verjüngt ausgebildet ist.

3. Noppenplatte nach Anspruch 1 oder 2,
**dadurch gekennzeichnet,**
**daß** das Verhältnis der Breite (C) jeder Klemmnase (18) in der Nachbarschaft des Grundflächenelementes (14) zum halben Teilungsabstand (T) des Gitterrasters größenordnungsmäßig 1:3 bis 1:4 beträgt.

4. Noppenplatte nach einem der Ansprüche 1 bis 3,
**dadurch gekennzeichnet,**
**daß** das Grundflächenelement (14) mit Erhebungen (24) ausgebildet ist, die zwischen den Noppen (16) entlang den Gitterlinien des Gitterrasters verlaufen.

5. Noppenplatte nach Anspruch 4,
**dadurch gekennzeichnet,**
**daß** die Erhebungen (24) eine Breite (D) besitzen, die der Breite (C) der Klemmnasen (18) in der Nachbarschaft des Grundflächenelementes (14) entspricht.

6. Noppenplatte nach einem der Ansprüche 1 bis 5,
**dadurch gekennzeichnet,**
**daß** sie aus einer formstabilen Tiefziehfolie besteht.

7. Noppenplatte nach Anspruch 6,
**dadurch gekennzeichnet,**
**daß** sie aus einer Polystyrolfolie mit einer Dicke von größenordnungsmäßig 0,8 mm besteht.

8. Noppenplatte nach einem der Ansprüche 1 bis 7,
**dadurch gekennzeichnet,**
**daß** sie zur direkten überlappenden Verlegung auf einer Standard-Wärmedämmung vorgesehen ist.

9. Noppenplatte nach einem der Ansprüche 1 bis 7,
**dadurch gekennzeichnet,**
**daß** sie an ihrer Unterseite mit einer Wärme- und Trittschalldämmung versehen ist.

## Claims

1. Plate with protuberances for underfloor heating, protuberances (16) standing up from a basic two-dimensional element (14) and being provided in a square grid pattern offset by half a pitch spacing (T),
**characterized in that**
each protuberance (16) has a cross-shaped basic two-dimensional contour oriented in the grid pattern, each protuberance (16) having an oblique surface tapered upwards in the manner of a truncated cone, starting from the basic two-dimensional element (14) in the direction diagonal to the grid pattern, and, in the direction of the grid pattern, in each case being formed with a clamping lug (18) which overhangs upwards and is provided in order to clamp a heating pipe (23), and the upper side (20) of each protuberance (16) having, in the vicinity of each clamping lug (18), a channel (22) oriented parallel with the grid pattern.

2. Plate with protuberances according to Claim 1, **characterized in that** each clamping lug (18) is tapered trapezoidally upwards, starting from the basic two-dimensional element (14).

3. Plate with protuberances according to Claim 1 or 2, **characterized in that** the ratio of the width (C) of each clamping lug (18) in the vicinity of the basic two-dimensional element (14) to half the pitch spacing (T) of the grid pattern is of the order of magnitude of 1:3 to 1:4.

4. Plate with protuberances according to one of Claims 1 to 3, **characterized in that** the basic two-dimensional element (14) is formed with elevations (24) which run between the protuberances (16) along the grid lines of the grid pattern.

5. Plate with protuberances according to Claim 4, **characterized in that** the elevations (24) have a width (D) which corresponds to the width (C) of the clamping lugs (18) in the vicinity of the basic two-dimensional element (14).

6. Plate with protuberances according to one of Claims 1 to 5, **characterized in that** it consists of a dimensionally stable thermoformed film.

7. Plate with protuberances according to Claim 6, **characterized in that** it consists of a polystyrene film with a thickness of the order of magnitude of 0.8 mm.

8. Plate with protuberances according to one of Claims 1 to 7, **characterized in that** it is provided to be laid in a directly overlapping fashion on standard thermal insulation.

9. Plate with protuberances according to one of Claims 1 to 7, **characterized in that** it is provided on its underside with thermal and footfall insulation.

## Revendications

1. Plateau à nodules pour un chauffage par le plancher, du type dans lequel, depuis un élément superficiel de base (14), partent vers le haut des nodules (16) qui sont agencés, suivant le quadrillage d'une grille rectangulaire, en étant décalés d'un demi-intervalle d'espacement (T), **caractérisé en ce que** chaque nodule (16) présente un contour superficiel de base en forme de croix orienté dans le quadrillage de la grille de manière telle que chaque nodule (16) présente, dans la direction diagonale de la grille et en partant de l'élément superficiel de base (14), une surface oblique en forme de tronc de cône se rétrécissant vers le haut, et, dans la direction de la grille, un nez de pincement (18), dépassant vers le haut et destiné à pincer un tube de chauffage (23), et de manière telle que la face supérieure (20) de chaque nodule (16) présente, dans le voisinage de chaque nez de pincement (18), une cannelure (22) orientée parallèlement au quadrillage de la grille.

2. Plateau à nodules selon la revendication 1, **caractérisé en ce que** chaque nez de pincement (18) se rétrécit en forme de trapèze en partant de l'élément superficiel de base (14).

3. Plateau à nodules selon l'une ou l'autre des revendications 1 ou 2, **caractérisé en ce que** le rapport de la largeur (C) de chaque nez de pincement (18) dans le voisinage de l'élément superficiel de base (14) au demi-intervalle d'espacement (T) du quadrillage de la grille est de l'ordre de 1:3 à 1:4.

4. Plateau à nodules selon l'une quelconque des revendications 1 à 3, **caractérisé en ce que** l'élément superficiel de base (14) comporte des reliefs (24) qui s'étendent entre les nodules (16) le long des barreaux du quadrillage de grille.

5. Plateau selon la revendication 4, **caractérisé en ce que** les reliefs (24) présentent une largeur (D), qui correspond à la largeur (C) des nez de pincement (18) dans le voisinage de l'élément superficiel de base (14).

6. Plateau à nodules selon l'une quelconque des revendications 1 à 5, **caractérisé en ce qu'**il est constitué par un feuille emboutie de forme stable.

7. Plateau à nodules selon la revendication 6, **caractérisé en ce qu'**il consiste en une feuille de polystyrène d'une épaisseur de l'ordre de 0,8 mm.

8. Plateau à nodules selon l'une quelconque des revendications 1 à 7, **caractérisé en ce qu'**il est destiné à la pose par recouvrement direct pardessus une isolation thermique standard.

9. Plateau à nodules selon l'une quelconque des revendications 1 à 7, **caractérisé en ce qu'**il est prévu, sur sa face inférieure, avec une isolation thermique et /ou sonore vis-à-vis du piétinement.
